# EUROPÄISCHE PATENTANMELDUNG

(11) **EP 1 515 207 A1**
(43) Veröffentlichungstag der Anmeldung: **16.03.2005**
(21) Anmeldenummer: 04020917.3
(22) Anmeldetag: 02.09.2004
(51) Int. Cl.: G05B 19/408

(54) **Automatisierungsobjekt und Verfahren zur Beschreibung eines Automatisierungsobjektes unter Verwendung einer Metasprache**

(30) Priorität: 15.09.2003 DE 10342591
(71) Anmelder: Siemens Aktiengesellschaft, 80333 München (DE)
(72) Erfinder: Fritsch, Wolfgang, 91056 Erlangen (DE); Hodek, Roman, Dr., 91052 Erlangen (DE); Seeger, Guido, Dr., 91083 Baiersdorf (DE); Siering, Till-Christian, 91301 Forchheim (DE)

(57) **Zusammenfassung**

Automatisierungsobjekt bzw. Verfahren zur Informationsbeschreibung eines Automatisierungsobjektes

Die Erfindung betrifft ein Automatisierungsobjekt (1,3) welches zumindest mit einem weiteren Automatisierungsobjekt (1,3) datentechnisch verbindbar ist. Das Automatisierungsobjekt (1,3) weist eine objektspezifische Information aufweist, wobei diese objektspezifische Information dem weiteren Automatisierungsobjekt (1,3) zuspielbar ist. Die objektspezifische Information liegt in einer Metasprache bzw. in einer zu einer Metasprache konvertierbaren Form vor. Auch ein entsprechendes Verfahren bei dem objektspezifische Informationen von einem Automatisierungsobjekt zu einem anderen Automatisierungsobjekt (1,3) übermittelt werden betrifft die Erfindung.

## Beschreibung

Automatisierungsobjekt bzw. Verfahren zur Informationsbeschreibung eines Automatisierungsobjektes

Die vorliegende Erfindung betrifft ein Automatisierungsobjekt bzw. ein Verfahren zur Informationsbeschreibung eines Automatisierungsobjektes. Ein Automatisierungsobjekt ist beispielsweise eine numerische Steuerung (CNC), eine Motion-Control-Steuerung, eine speicherprogrammierbare Steuerung (SPS bzw. PLC), ein Antrieb, insbesondere ein elektrischer Antrieb, ein Sensor, ein Umrichter, ein Stromrichter bzw. auch andere Hardware-Komponenten die zur Automatisierung dienen. Ein Automatisierungsobjekt ist neben einem Hardwareobjekt auch ein Softwareobjekt, wobei ein Softwareobjekt beispielsweise eine Drehzahlregelung, eine Schlupfregelung, eine Momentenregelung oder andere Regelungen bzw. Steuerungen sind, welche einem Automatisierungszweck dienen.

Um ein derartiges Automatisierungsobjekt nutzen zu können, müssen dessen Eigenschaften bekannt sein, bzw. zumindest die Eigenschaften des entsprechenden Interfaces. Das Interface ist insbesondere eine Software-Schnittstelle. Dieses Wissen wird in der Regel in Form von Dokumenten oder maschinenlesbaren Dateien zum Erstellungszeitpunkt des Automatisierungsobjektes festgeschrieben und an alle Nutzer des Automatisierungsobjektes verteilt bzw. datentechnisch zur Verfügung gestellt. Meist sind diese "Nutzer", Clients genannt, andere Software-Automatisierungsobjekte in einer anderen Hardware, in die das Wissen bzw. die Information einzubringen ist bzw. auch andere Hardware-Automatisierungsobjekte. Dokumentierte Information wird meist in ein Programm einprogrammiert, maschinenlesbare Interface-Beschreibungen werden einkompiliert oder aber man lädt die Beschreibungen von einem Programmiergerät (PG), dessen Software das Wissen hat, in die Clients hinein.

Wenn sich ein Interface eines Automatisierungsobjektes wie z.B. einer Steuerung ändert, z.B., weil eine Funktionalität hinzugefügt, erweitert, reduziert oder anderweitig verändert ist, ist die diesbezügliche Information bei den Clients zu aktualisieren. Dies kann zur Folge haben, dass die Software der Clients zu tauschen ist, oder es muss mindestens eine neue "Projektierung" geladen werden. Beide Verfahren sind aufwendig und fehlerträchtig, insbesondere wenn viele Clients betroffen sind. Werden sie nicht richtig durchgeführt, gerät eine Anlage, welche mehrere Automatisierungsobjekte aufweist in einen inkonsistenten Zustand, das Verhalten ist nicht mehr vorhersagbar. Es kann sogar zu Maschinen- oder Personenschäden kommen, weil Meldungen des Clients falsch angezeigt werden oder in den Steuerungen die falschen Funktionen ausgelöst werden. Diese Probleme werden insbesondere durch den Tausch von Automatisierungsobjekten hervorgerufen, welche bezüglich ihres Interfaces nicht identisch sind. Der Interface ändert sich alleine auch schon durch zumindest einen unterschiedlichen Parameter.

Dieses Problem wird bislang beispielsweise derart gelöst, dass Eigenschaften der Steuerungen in sogenannten "Geräte-Beschreibungs-Dateien" als "Gerätestammdaten" geführt werden. Diese Dateien werden von einem Projektierungs-Werkzeug, das zur Steuerung passt, interpretiert und in Projektierungs-Information umgewandelt, die der Client versteht. Diese Projektierungs-Information wird in einem Inbetriebnahme-Schritt in den Client geladen, wodurch dieser das Wissen erhält, um die Zugriffe richtig durchzuführen. Wird dieser Lade-Schritt vergessen, kann der Client jedoch gar nicht zugreifen oder falls er noch veraltete Information hat, wird er falsch zugreifen. Diese Vorgehensweise ist also fehlerträchtig, insbesondere auch deswegen, weil der Client die gesamten Informationen fehlerfrei erhalten muss und die Gerätestammdaten die beispielsweise in eine Art Liste vorliegen komplett zu überschreiben sind. Verändert sich die Liste nicht nur in Bezug auf die enthaltenen Dateninformation sonder auch in Bezug auf ihre Länge so kann dies zu Interpretationsfehlern führen.

Zur Laufzeit eines Automatisierungsobjektes ladbare einfache Datenbeschreibungen und Interpretation im Client, z.B. Beschreibung der sog. "Maschinendaten" einer numerischen Steuerung in einem dafür vorgesehenen Format sind bekannt. Hier wird ein Teil des Interfaces mit Hilfe einer Daten-Attribut-Tabelle maschinenlesbar beschrieben. Die Tabelle wird bei Änderung der Steuerung automatisch mitgetauscht. Der Client kann diese Tabelle jederzeit aus der Steuerung laden, wodurch zur Laufzeit ein Abgleich zwischen Steuerung und Client stattfinden kann und der Client nur wenig Vorwissen haben muss. Das Format ist, um effizient verarbeitet werden zu können, jedoch sehr starr, nicht erweiterbar und kann auch nur einfache Datentypen beschreiben. Obendrein belastet es wegen fehlender Versionierung den Client relativ häufig mit Ladevorgängen, die den Benutzer zum Warten zwingen.

Bei zunehmender Komplexität programmierbarer Steuersysteme und Anlagen, welche Automatisierungsobjekte aufweisen, wird ein Tausch von einem oder mehreren Automatisierungsobjekten immer schwieriger, da sich Versionsstände der Automatisierungsobjekte immer häufiger ändern und damit auch deren Interface bzw. deren objektspezifische Information.

Eine Möglichkeit diesen steigenden Anforderungen zu begegnen läge darin immer mehr Sicherungsfunktionen in eine Automatisierungsanlage zu integrieren um Fehler auszuschließen. Diese sind jedoch aufwendig und verbrauchen Ressourcen.

Aufgabe der vorliegenden Erfindung ist es ein Automatisierungsobjekt zu verbessern, insbesondere bezüglich objektspezifischer Information. Weiterhin ist die Dateninformation eines Automatisierungsobjektes bezüglich einer objektspezifischen Information zu verbessern. Damit lässt sich ein höherer Automatisierungsgrad erzielen.

Diese Aufgabe wird durch ein Automatisierungsobjekt mit dem im Anspruch 1 angegebenen Merkmalen gelöst. Vorteilhafte Ausgestaltungen und Weiterbildungen ergeben sich aus den abhängigen Ansprüchen 2 bis 7. Der Anspruch 8 betrifft ein Verfahren zur Informationsbeschreibung eines Automatisierungsobjektes und löst mit seinen Merkmalen ebenso die Aufgabe. Vorteilhafte Ausgestaltungen und Weiterbildungen des Verfahrens ergeben sich aus den Unteransprüchen 9 bis 13.

Erfindungsgemäß ist ein Automatisierungsobjekt mit einem weiteren Automatisierungsobjekt datentechnisch verbindbar, wobei das Automatisierungsobjekt eine objektspezifische Information aufweist bzw. die objektspezifische Information dem weiteren Automatisierungsobjekt zuspielbar ist, wobei die objektspezifische Information in einer Metasprache bzw. in einer zu einer Metasprache konventierbaren Form vorliegt.

Die objektspezifische Information liegt also in einem definierten Format vor, wobei dieses definierte Format eine standardisierte Metasprache wie beispielsweise XML ist. Die in eine Metasprache konvertierbare Form ist insbesondere ein kompaktes, erweiterbares, mit geringen Ressourcen zu interpretierendes Format. Das Format ist insbesondere ein verlustfrei nach und von XML wandelbares, steuerungsinternes Format zum Austausch von Daten und Datenbeschreibungen. Die Formatwandlung von und nach XML erfolgt vorteilhafter Weise einfach und schnell.

Das Format weist beispielsweise einen Header auf. In diesem Header sind beispielsweise Bits für eine Versionskennung vorsehbar. Weiterhin sind andere Bits für weitere Funktionen vorsehbar.

Nach dem Header folgt beispielsweise ein Root-tag. Dieser Root-tag enthält als Compound-tag den gesamten Dateninhalt. Es ist insbesondere nur ein Root-tag pro Format-Datei zulässig. Ein Data-tag weist beispielsweise eigenen Header auf.

Das Automatisierungsobjekt ist beispielsweise wie obig bereits beschrieben ein Softwareobjekt oder ein Hardwareobjekt. Eine Automatisierungskomponente wie ein Motor oder eine speicherprogrammierbare Steuerung ist ein Hardwareobjekt.

Auch Funktionen programmierbarer Steuerungen, wie numerische Steuerungen (CNCs), Motion-Control-Steuerungen und speicherprogrammierbare Steuerungen (PLCs) sowie Antriebe und intelligente Sensoren stellen sich nach außen, d.h. zum nächsten übergeordneten bzw. untergeordneten bzw. nebengeordneten Automatisierungsobjekt oder zum Anwender hin, als Automatisierungsobjekt mit einem Interface dar. Dieses Interface weist beispielsweise aufrufbaren bzw. abrufbare Funktionen, bzw. auch lesbare bzw. schreibbare Datenwerte auf. Ein Automatisierungsobjekt ist beispielsweise vordefiniert, wie z.B. bei einer elektrischen Maschine, welche Maschinendaten aufweist, bzw. werden erst von einem Anwender definiert und in die Steuerung geladen.

Technische Eigenschaften von Geräten wie beispielsweise die Maximaldrehzahl eines Motors oder der Bemessungsstrom werden häufig in herkömmlichen Datenbanken abgelegt.

Sollen neue Produkte oder neue Regeln aufgenommen werden, dann muss der jeweilige Katalog neu herausgegeben und die jeweilige Software neu kompiliert werden.

Dadurch ergibt sich eine Reihe von Problemen. So sind bisherige Auslegungsverfahren nicht miteinander vergleichbar. Weiterhin sind bisherige Auslegungsverfahren nicht miteinander kombinierbar.

Der Begriff "Metasprache" steht für die Definition oder Beschreibung einer Sprache. Die Metasprache beschreibt die Regeln zur Erzeugung einer Sprache. Die "Standard Generalized Markup Language" (SGML) z.B. wird als Metasprache bezeichnet, weil sie eine Sprache zur Beschreibung von Sprachen darstellt. Sie legt die Regeln darüber fest, wie ein Dokument in seiner logischen Struktur (Überschriften, Absätzen, inhaltlichen Einheiten usw.) beschrieben werden kann. XML (extensibel markup language) ist als Untermenge von SGML ebenfalls eine Metasprache für das Definieren von Dokumenttypen. Mit einer Metasprache, wie beispielsweise SGML und XML ist es möglich, Dokumente zu erstellen, die alle den gleichen Grundmustern im Aufbau folgen.

Allein zur Vereinfachung der Darstellung und Erläuterung der Erfindung wird diese im nachfolgenden beispielhaft anhand von XML beschrieben.

Ein wesentlicher Vorteil von XML ist, dass eine strikte Trennung zwischen Inhalt, Darstellung und Struktur von Daten vorgenommen wird. Erreicht wird dies durch die Möglichkeit, in XML-Dateien Tags zu definieren, die wiederum Tags enthalten können. Dadurch kann eine XML-Datei einen Baum aufbauen, der zu einer strukturierten Trennung verschiedener Inhalte führt. Dadurch ist die Grundlage für eine maschinelle Bearbeitung der Datei gewährleistet.

Mit Hilfe von verschiedenen XSL-Dateien (XSL = extensible stylesheet language) kann ein XML-Dokument unterschiedliche Darstellungen annehmen. Für die Umwandlung von einem XML-Dokument in ein anderes dient XSLT = extensible stylesheet language for transformations). Anwendungsgebiete für XSLT können die Umwandlung von XML-Dateien in HTML (hypertext markup language) oder XHTML (extensible hypertext markup language), aber auch in freie Formate sein.

In einer vorteilhaften Ausgestaltung ist die objektspezifische Information hierarchisch aufgebaut. Für den hierarchischen Aufbau lässt sich besonders vorteilhaft die Metasprache verwenden, da durch diese eine Art Baumstruktur realisierbar ist, mit deren Hilfe Informationen strukturiert und hierarchisiert ablegbar sind. Durch den hierarchischen Aufbau ist Zusatzinformation übermittelbar, welche über die Daten, welche hierarchisch abgelegt sind alleine noch nicht zur Verfügung stehen. Beispielsweise ist bei einer Auslegung von Antriebssystemen, welche verschiedene Automatisierungsobjekte wie Motoren, Antriebe mit Stromrichtern aufweisen eine Vielzahl von Schnittstellen, Interfaces, vorhanden. Die Schnittstellen bzw. Interfaces betreffen insbesondere auch physikalische Eigenschaften wie z.B. Temperaturkennlinien bei elektrischen Motoren, Nennströme, Nennspannungen, Maximaldrehzahl, Bemessungsströme usw..

In einer vorteilhaften Ausgestaltung weist das Automatisierungsobjekt selbst seine eigenen objektspezifischen Informationen auf. Wird also ein Automatisierungsobjekt getauscht oder neu in eine Struktur verschiedener datentechnisch verknüpfter Automatisierungsobjekte eingebunden, so führt das hinzugekommene Automatisierungsobjekt stets eine Selbstbeschreibung zumindest wesentliche Informationen mit sich, welche von weiteren mit in diesen datentechnisch verbundenen Automatisierungsobjekt ausgelesen werden können.

In einer vorteilhaften Ausgestaltung ist die Metasprache eine standardisierte XML-Sprache, die unter dem Namen MathML bekannt ist. Damit lassen sich insbesondere technische Eigenschaften einzusetzende Automatisierungsobjekte zusammen mit Regeln und Verfahren bzw. Vorschriften verwenden. Somit ist auch Systemwissen abspeicherbar.

Diese MathML-Spezifikation wurde geschaffen, um mathematische Beziehungen in XML verfügbar zu machen. Details dieser Spezifikation können unter der Internet-Adresse http://www.w3.org/TR/MathML2 abgerufen werden. Diese Spezifikation wird als Basis dafür verwendet, Systemwissen auf dem Gebiet der Antriebstechnologie zu beschreiben.

Vorzugsweise wird die an sich bekannte MathML-Spezifikation in geeigneter Weise erweitert, um Systemwissen auf dem Gebiet der Antriebstechnologie zu beschreiben. Beispielsweise umfasst die gemäß einer Weiterbildung der Erfindung erweiterte MathML-Spezifikation auch Strings, die bei der standardisierten MathML-Spezifikation nicht vorgesehen sind. Strings sind dabei Zeichenketten, mit denen keine Rechenvorgänge vorgenommen werden. Derartige Zeichenketten können beispielsweise Bestellnummern, Produktnamen oder RAL-Farbtönen entsprechen.

Eine weitere vorteilhafte Weiterbildung der Erfindung besteht darin, eine erweiterte MathML-Spezifikation zu verwenden, die auch frei definierte Operatoren umfasst. Derartige Operatoren können Definitionsbereiche von Funktionen angeben. So lässt sich beispielsweise eine Regel angeben, gemäß welcher eine gegebene Funktion für alle Werte einer Variablen, die größer sind als ein gegebener Schwellenwert, nicht definiert ist.

Das von einem Automatisierungsobjekt, wie z.B. einem Client ansprechbare Automatisierungsobjekt z.B. einer Steuerung weist z.B. als objektspezifische Information eine Selbstbeschreibung auf, die insbesondere häufig veränderlichen Aspekte des Automatisierungsobjektes abdeckt und die zur Laufzeit aus der Steuerung ladbar ist. In der Selbstbeschreibung sind z.B. vordefinierte und anwenderdefinierte Daten, Meldungen, Programmanweisungen, Funktionsaufrufe samt Signatur, der Wortschatz der Programmiersprache der Steuerung usw.. Selbst Visualisierungs-Aspekte oder ähnliche Anweisungen, die das Verhalten des Clients steuern, hinterlegbar. Die Selbstbeschreibung, weist z.B. vorteilhafter Weise zumindest eine der folgenden Eigenschaften auf:
- Erweiterbarkeit durch Aufwärtskompatibilität; Dadurch können neue Eigenschaften hinzugefügt und beschrieben werden, ohne dass die alten, schon vorhandenen, unlesbar werden.
- Eine Selbstbeschreibung des Formats, in Form einer Version sowie weiterer optionaler Angaben.
- Feststellbarkeit von Änderungen des Inhalts durch den Client, so dass stets klar ist, ob der Client die Beschreibung neu zu laden hat.
- Die Selbstbeschreibung wird stets zusammen mit den Objekten getauscht, die von ihr beschrieben werden.
- Die Selbstbeschreibung ist mit einem einfachen Verfahren für den Client auffindbar und ladbar.
- Die Selbstbeschreibung ist durch die Verwendung des Binärformates sehr kompakt und beansprucht dadurch wenig Speicherplatz sowohl bei der Lagerung, beim Transport als auch bei der Verarbeitung.
- Die Selbstbeschreibung ist sowohl durch die Nutzung der Metasprache effizient und mit wenig Rechenleistung interpretierbar als auch durch eine kompakte Speicherung im Binärformat, welches auf effizientes Lesen/Interpretieren ausgerichtet ist effiziert.
- Die Selbstbeschreibung ist verlustfrei in ein XML-Format konvertierbar und rückkonvertierbar.
   Alle Eigenschaften sind im XML-Format anlegbar und dann in die Selbstbeschreibung konvertierbar.
   Für die Anwendung zur Selbstbeschreibung von Automatisierungskomponenten muss nicht der gesamte XML-Sprachumfang unterstützt werden, sondern nur ein Subset.
- Die Selbstbeschreibung ist auch auf Objekte von Bediengeräten anwendbar.

Der Client bzw. das Automatisierungsobjekt hat in einer Ausführung nur das Wissen mitzubringen, wie die Selbstbeschreibung bzw. die objektspezifische Information zu finden ist, wie sie sie aus der Steuerung lesen und interpretieren und, wie festzustellen ist, wann die Beschreibung neu zu lesen bzw. zu interpretieren ist, weil sie sich geändert hat. Ansonsten ist ein weitgehend "generisches" Arbeiten möglich, d.h. auch ein Zusammenarbeiten mit sehr verschiedenen Steuerungen ist sinnvoll, ohne über jede spezifisches A-priori-Wissen mitzubringen. Weder spezifische Client-Softwarestände noch besondere Lade-Vorgänge von Treibern oder Gerätebeschreibungen müssen vorbereitend gemacht werden. Auch gleichzeitig aktive unterschiedliche Versionen von Steuerungen werden leicht beherrscht, da sich der Client automatisch auf die Eigenschaften des Geräts einstellt.

Dadurch ist es auch relativ einfach, Clients zur Ferndiagnose und Fernwartung zu bauen, da in der Ferne nur ein generischer Client installiert sein muss, der mit allen "im Feld", d.h. beim Anwender befindlichen Steuerungen zusammenarbeitet, solange sich das Verfahren zur Hantierung der Selbstbeschreibung nicht inkompatibel ändert. Im Gegensatz zum in diesem Zusammenhang oft vorgeschlagenen WEB-Browser als generischem Client wird die Steuerung jedoch wesentlich weniger mit Visualisierungs-Aspekten belastet (Sprachen, Fonts, Fenster, Masken, Eingabeverfahren, Bedienlogik, Bediengeschwindigkeit etc.), die weiterhin client-spezifisch und damit an die Bedürfnisse des jeweiligen Benutzers angepasst hantiert werden können. Dadurch wird gleichzeitig eine bessere Bedienbarkeit (usability) erreicht als beim Web-Browser-Konzept.

In vorteilhafter Weise ist die objektspezifische Information in einem Binärformat bzw. in einem ASCI-Format abgelegt. Das Vorliegen der objektspezifischen Information in einem Binärformat hat den Vorteil, dass durch dieses Binärformat wenig Speicherplatz benötigt wird. Der Vorteil des ASCI-Formates ist, dass dieses ein von einer Person lesbares Format ist. Beide Formate sind ineinander überführbar.

Die Aufgabe ein Automatisierungssystem insbesondere bezüglich objektspezifischer Informationen zu verbessern wird aufgelöst durch ein Verfahren zur Informationsbeschreibung eines Automatisierungsobjektes. Danach ist zumindest ein erstes Automatisierungsobjekt mit einem zweiten Automatisierungsobjekt datentechnisch verbunden. Von einem ersten Automatisierungsobjekt wird eine objektspezifische Information, welche in eine Metasprache bzw. in einer zu einer Metasprache konvertierbaren Form vorliegt an das zweite Automatisierungsobjekt übermittelt. Die objektspezifische Information ist insbesondere hierarchisch aufgebaut. Vorteilhafter Weise ist im ersten Automatisierungsobjekt eine objektspezifische Information gespeichert, die dieses erste Automatisierungsobjekt beschreibt. Diese objektspezifischen Informationen sind zur datentechnischen Übertragung an das zweite Automatisierungsobjekt vorgesehen, wobei diese objektspezifische Informationen im zweiten Automatisierungsobjekt gespeichert werden. Damit ist eine vernetzte Struktur aufbaubar, wobei Automatisierungsobjekte in dieser Struktur, welche datentechnisch vernetzt ist Informationen über weitere Automatisierungsobjekte enthalten.

In einer vorteilhaften Ausgestaltung erkennt ein Automatisierungsobjekt eine Veränderung bezüglich Hardware- bzw. Softwareeigenschaften eines weiteren Automatisierungsobjektes, wobei die Automatisierungsobjekte miteinander verbunden sind. Mittels eines Datenabgleiches wird eine Änderung der Eigenschaft des veränderten Automatisierungsobjektes erkannt. Danach erfolgt eine Übermittlung der objektspezifischen Informationen des veränderten Automatisierungsobjektes an das Objekt, welches diese Veränderung erkannt hat. Insbesondere im Fall von Software-Updates oder Ersatzlieferungen im Austauschfall von Automatisierungsobjekten ist so gewährleistet, dass in einem datentechnischen Verbund von Automatisierungsobjekten eine reibungslose Funktion des gesamten Systems von Automatisierungsobjekten gewährleistet bleibt, da die Automatisierungsobjekte vorteilhafter Weise jedes Automatisierungsobjekt objektspezifische Informationen aufweist, welche an Automatisierungsobjekte übermittelbar ist, zu dieser Information benötigen.

Vorteilhafter Weise erfolgt die Übermittlung der objektspezifischen Information in einem Initialisierungsmodus des zweiten Automatisierungsobjektes. Da im Austauschfall von Automatisierungsobjekten bzw. im Fall eines Software-Updates eines Automatisierungsobjektes zumeist eine Initialisierung durchgeführt wird, ist es vorteilhaft bei jeder Initialisierung in einem entsprechenden Initialisierungsmodus eine Prüfung der objektspezifischen Daten der Automatisierungsobjekte durchzuführen, die an einem Automatisierungsobjekt datentechnisch gekoppelt sind.

Mit Hilfe des erfindungsgemäßen Automatisierungsobjektes bzw. des erfindungsgemäßen Verfahrens kann insbesondere zumindest einer der folgenden beispielhaft beschriebenen Vorteile erreicht werden:
a) Durch die Flexibilität des Formats können sehr viele Objekteigenschaften in der Selbstbeschreibung ausgedrückt werden, auch die von komplexen Objekten und die von konzeptionell sehr verschiedenen Objekten. Damit sind sehr viele Eigenschaften der Steuerung "generisch" ansprechbar. Oft muss nur die Steuerung, aber nicht der Client geändert werden, um eine Funktion vollständig nutzbar zu machen. Das spart viel Entwicklungsaufwand, entkoppelt die Entwicklungsteams und erleichtert die Verwaltung von Software-Versionen "im Feld2, d.h. beim Anwender, enorm.
b) Durch die aufwärtskompatible Erweiterung können auch alte Clients, die nur einen Teil der Selbstbeschreibung verstehen, mit neuen Steuerungen noch sinnvoll zusammenarbeiten. Die Zusammenarbeit wird nicht gänzlich verweigert, sondern der "Versionskonflikt" wird bestmöglich, nämlich mit leichter Einschränkung der Funktionalität, aufgelöst.
c) Die Selbstbeschreibung des Formats erlaubt es, auch nicht aufwärtskompatible Änderungen noch definiert zu behandeln. Fehlinterpretationen werden zuverlässig vermieden.
d) Durch die eindeutige "Stempelung" der Selbstbeschreibung bei jeder Änderung kann der Client zuverlässig feststellen, ob er eine aktuelle Beschreibung zu sich geladen hat. Er kann sich daher eine Kopie der Beschreibung halten, auf die er schneller zugreifen kann, sie sogar konvertieren, um nur für ihn interessante Aspekte herauszufiltern oder den Zugriff noch effizienter zu gestalten, und weiß trotzdem stets, wann er diese Kopie und ihre Derivate verwerfen und neu aufbauen muss. Dadurch wird die Beschreibung stets genau dann übertragen, wenn es wirklich nötig ist, ohne dass ein Mensch eingreifen müsste. Konsistenz ist automatisch sichergestellt, effiziente Verarbeitung auch. Dies gilt auch, wenn die Clients mal mit der einen, mal mit der anderen Steuerung kommunizieren, da die Clients stets vor dem Zugriff die Stempelung überprüfen.
e) Da die Selbstbeschreibung stets zusammen mit den Objekten getauscht wird, passt sie immer zum Objekt und erlaubt immer den korrekten Zugriff. Dieses gleichzeitige Tauschen findet in ein und derselben Komponente statt (der Steuerung, die das Objekt enthält) und ist damit sehr einfach "narrensicher" zu gestalten. Die Stempelung (s. voriger Punkt) stellt dann sicher, dass auch alle Clients stets eine passende Beschreibung halten. Die Steuerung unterstützt die Clients, indem sie Änderungen der Stempel an alle angemeldeten (mit ihr verbundenen) Clients "publiziert".
f) Durch das einfache Lokalisieren der Beschreibung (z.B. über ein Verzeichnis oder Namenskonventionen oder ein immer vorhandenes "Browsing"-Interface) kann der Client automatisch erkennen, welche Objekte in der Steuerung existieren und wie er sie ansprechen kann. Er muss nicht a priori wissen, welche Objekte es gibt. Dadurch lassen sich insbesondere vom Anwender definierte Objekte wie Programme, Programmvariablen, Meldungen und dergleichen behandeln, ohne dass man Wissen vorher in den Client laden muss. Besonders wichtig ist dies für Diagnose-Szenarien, da dieses Vorwissen (die "Projektierung" der Steuerung) hier oft nicht zugänglich ist oder nicht zur Steuerung passt.
g) Durch die Kompaktheit der Beschreibung wird die Selbstbeschreibung überhaupt erst kostengünstig realisierbar. Man müsste ansonsten mit einem um Faktoren höheren Speicherbedarf und hoher Kommunikationsbandbreite rechnen und entsprechend unrealistischen Produkt-Preisen. Aus diesen Gründen sind z.B. XML-Formate trotz ihrer Eleganz und Flexibilität in Automatisierungsgeräten nur selten sinnvoll einsetzbar. Wichtig ist, dass der Ansatz so weit wie möglich nach "unten", in Richtung kleiner Geräte, skaliert, damit er z.B. auch in intelligenten Sensoren, kleinen Antrieben und kleinen Steuerungen durchgängig einsetzbar ist.
h) Eine effiziente Verarbeitung der Beschreibung ist wichtig, damit auch kleine Clients, wie z.B. einfache Bediengeräte mit wenig Speicher und Rechenleistung das Konzept umsetzen können. Auch in dieser Hinsicht wären XML-Formate untauglich, da sie aufwendige Parser erfordern und die Informationen durch sequentielles Durchlesen gefunden werden müssen, während eine effiziente Codierung der Beschreibung auch eine nichtlineare Verarbeitung zulässt.
i) Die Konvertierung von und nach XML erschließt fast alle Vorteile, die XML-Formate mit sich bringen, ohne die Steuerungen zur Laufzeit mit den Nachteilen zu belasten. So kann die Beschreibungs-Information zunächst in XML-Form erzeugt, ggf. von Menschen gelesen und gedeutet, mit XML-Standard-Werkzeugen weiterverarbeitet und archiviert werden. Durch die Konvertierung in ein effizienteres Format bekommt die Steuerung trotzdem nur die "Essenz" der Beschreibung, nicht den "Wasserkopf" der XML-Syntax zur maschinellen Verarbeitung. Umgekehrt kann eine aus der Steuerung geladenen Beschreibung stets in XML übersetzt werden, wo dies zur weiteren Verarbeitung vorteilhaft ist.
j) Objekte von Bediengeräten zu beschreiben, erscheint zunächst widersinnig, da diese meisten als Client auftreten und die Beschreibung anderer Geräte lesen. Es gibt jedoch einige Fälle, in denen Bediengeräte selbst andere Clients bedienen müssen, so z.B. bei der Ferndiagnose, beim Update oder der Konfiguration von Objekten des Bediengerätes. In diesem Sinne ist auch ein Bediengerät eine intelligente Automatisierungs-Komponente und sollte daher eine Selbstbeschreibung zumindest der wichtigsten Objekte liefern können.

In einer weiteren Ausgestaltung sind auch folgende Dienste realisierbar:
- Automatische Detektion, ob der Client die richtige Objektbeschreibung aufweist.
- Automatische Detektion de Clients ob sich die Automatisierungskomponente geändert hat.
- Falls eine Änderung festgestellt wird, laden der objektspezifischen Information in den Client; gegebenenfalls automatische Konvertierung und Ablage dieser objektspezifischen Information.
- Ein Beschreibungsinterpreter extrahiert die notwendigen objektspezifischen Informationen, wobei diese Informationen in einem für einen Anwender lesbaren Format nachstellbar sind.
- Der Client bzw. die Applikation nutzt die Information über die objektspezifischen Informationen zur Kommunikation mit der Automatisierungskomponente.

Durch die Verwendung von z.B. XML als Metasprache ist die objektspezifische Information sowohl von Menschen lesbar als auch maschinenlesbar. Dies erleichtert die Pflege einer Datenbank enorm. Diese Pflege kann insbesondere unter Zuhilfenahme von einem der zahlreichen bekannten XML-Editoren auch von Personen vorgenommen werden, die weder XML- noch Software-Spezialisten sein müssen. Weiterhin ist zu jedem Zeitpunkt eine elektronische Verarbeitbarkeit des Systemwissens gewährleistet. An der Schnittstelle zwischen Mensch und Maschine ist keine Übersetzung nötig.

Schließlich können die Regeln ebenso wie technische Details als Text in Datenbanken abgelegt werden. Das gesamte Wissen über objektspezifische Informationen kann damit über eine einheitliche Datenverwaltung gehandhabt werden.

Insbesondere ist es wegen der Universalität von XML bzw. von Metasprachen - gerade auch im Internet - jederzeit erweiterbar und auch in elektronischen Vertriebsformen einsetzbar.

Weitere vorteilhafte Eigenschaften der Erfindung ergeben sich aus deren beispielhafter Erläuterung anhand der Figur.
FIG 1 Zwei miteinander datentechnisch verbundene Automatisierungsobjekt,
FIG 2 eine objektspezifische Information in einer Metasprache.

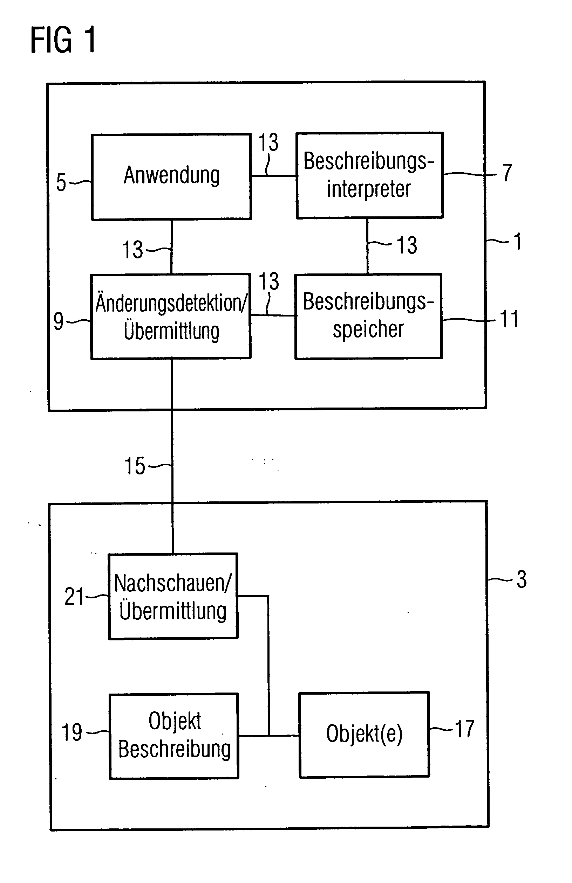

Die Darstellung gemäß FIG 1 zeigt einen Client 1 als ein erstes Automatisierungsobjekt und eine Automatisierungskomponente 3 als ein zweites Automatisierungsobjekt. Der Client 1 weist Softwaremodule auf. Ein Softwaremodul ist beispielsweise ein Applikation 5, ein Beschreibungsinterpreter 7, ein Beschreibungsspeicher 11 und ein Kommunikationsmodul 9. Die Module 5, 7, 9 und 11 sind über Kommunikationsverbindungen 13 datentechnisch miteinander verbunden. Über das Kommunikationsmodul 9 erfolgt die Verbindung zum zweiten Automatisierungsobjekt 3 mittels eines Datenübertragungsmittels 15. Das Datenübertragungsmittel 15 ist beispielsweise ein Buskabel oder auch eine Funkstrecke.

Die Automatisierungskomponente 3 weist ein softwarebasiertes Automatisierungsobjekt 17 auf, wie auch eine objektspezifische Information 19 und ein Schnittstellenmodul 21. Das Kommunikationsmodul 9 dient neben der Kommunikation dem Erkennen einer Änderung bei der Automatisierungskomponente 3. Das Schnittstellenmodul 21 dient dem Datentransfer bzw. auch dem Lookup. Das Lookup, als das "Hochschauen" dient der Automatisierungskomponente 3 dafür, welches Automatisierungsobjekt 1 angeschlossen ist.

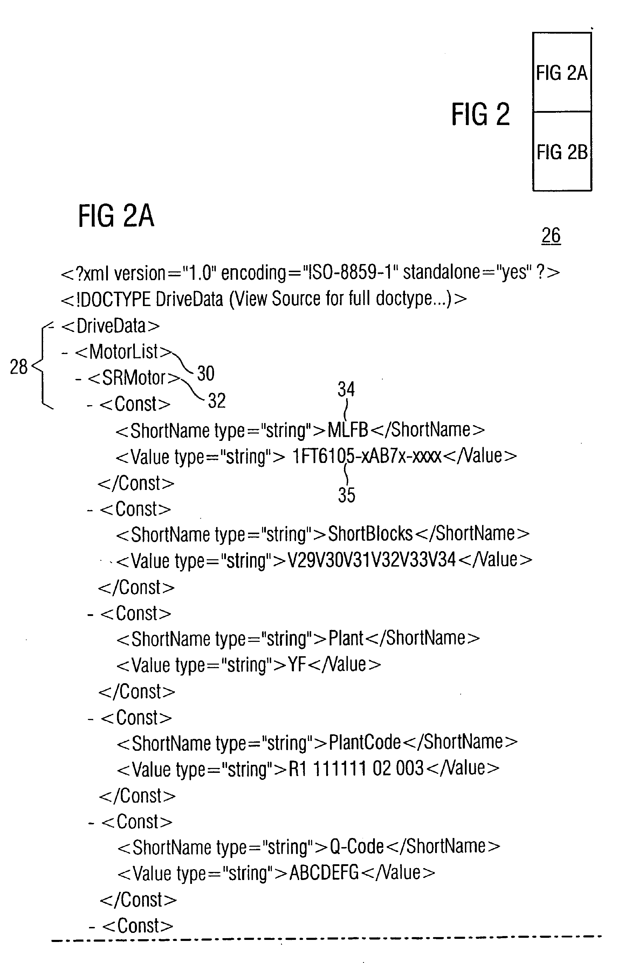

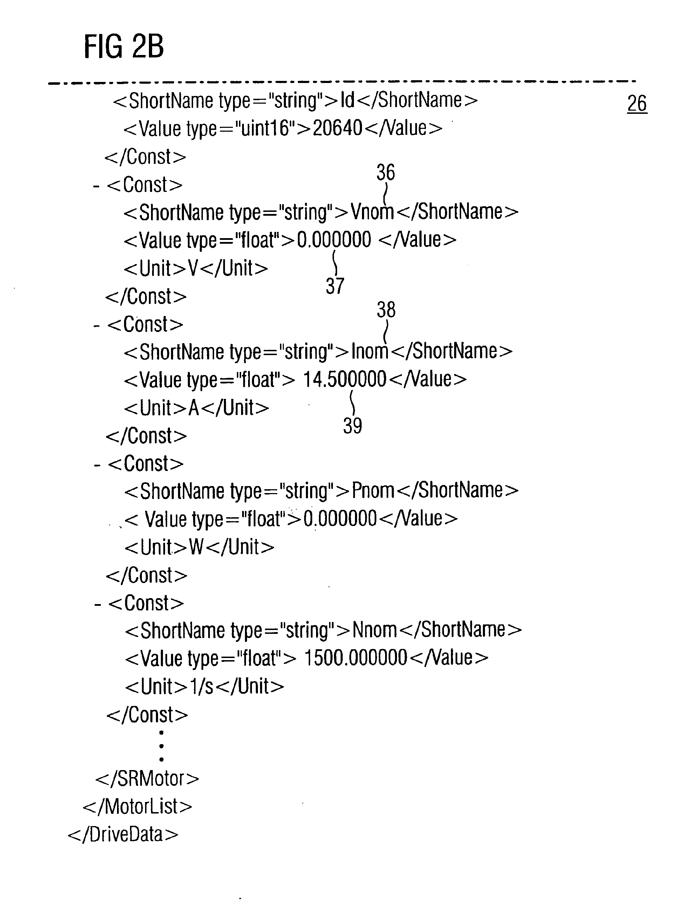

Die Darstellung gemäß FIG 2 zeigt eine objektspezifische Information 26 in einer Metasprache. Aus der FIG 2 ist eine Baumstruktur 28 ersichtlich. Die Baumstruktur 28 ist durch das Einrücken der jeweiligen Zeilenanfänge kenntlich gemacht. Innerhalb dieser Baumstruktur 28 wird eine Motorliste 30 eröffnet, in welcher beispielsweise ein bestimmter Motortyp 32 offenbart ist. Dieser Motortyp 32 lässt sich durch verschiedene Daten beschreiben. Ein Datum weist beispielsweise eine Wertbezeichnung und einen Wert auf. Die Wertbezeichnung 34 MLFB gibt beispielsweise die Bestellnummer des Motors an. Der Wert 35 der Bestellnummer ist dann als String gespeichert. Weitere Wertbezeichnungen sind beispielsweise die Wertbezeichnung 36 für eine Nominalgeschwindigkeit Vnom und einen dafür vorgesehenen Wert 37 von 0,00. Eine weitere Wertbezeichnung 38 ist beispielsweise der Nominalstrom Inom für den der Wert 39 in der Höhe von 14.500 festgelegt ist.

## Patentansprüche

1. Automatisierungsobjekt (1,3) welches zumindest mit einem weiteren Automatisierungsobjekt datentechnisch verbindbar ist, wobei das Automatisierungsobjekt eine objektspezifische Information aufweist bzw. die objektspezifische Information dem weiteren Automatisierungsobjekt zuspielbar ist, wobei die objektspezifische Information in einer Metasprache bzw. in einer zu einer Metasprache konvertierbaren Form vorliegt.

2. Automatisierungsobjekt (1,3) nach Anspruch 1, **dadurch gekennzeichnet, dass** die objektspezifische Information hierarchisch aufgebaut ist.

3. Automatisierungsobjekt (1,3) nach Anspruch 1 oder 2, **dadurch gekennzeichnet, dass** das Automatisierungsobjekt selbst die eigene objektspezifische Information aufweist.

4. Automatisierungsobjekt (1,3) nach einem der vorgenannten Ansprüche, **dadurch gekennzeichnet, dass** das Automatisierungsobjekt eine Software bzw. eine Hardware ist, wobei insbesondere die Hardware zumindest ein Mittel zur Datenspeicherung aufweist.

5. Automatisierungsobjekt (1,3) nach einem der vorgenannten Ansprüche, **dadurch gekennzeichnet, dass** die Information zur Erklärung eigener Eigenschaften zumindest eine Parameterinformation bzw. eine Schnittstelleninformation ist.

6. Automatisierungsobjekt (1,3) nach einem der vorgenannten Ansprüche, **dadurch gekennzeichnet, dass** Information zur Erklärung eigener Eigenschaften in einem Binärformat bzw. in einem ASCI-Format vorliegt.

7. Automatisierungsobjekt (1,3) nach einem der vorgenannten Ansprüche, **dadurch gekennzeichnet, dass** die Metasprache die Extensible Markup Language bzw. eine andere Metasprache ist, welche in die Extensible Markup Language konvertierbar ist, wobei die Konvertierung insbesondere informationsverlustfrei durchführbar ist.

8. Verfahren zur Informationsbeschreibung eines Automatisierungsobjektes (1) wonach zumindest ein erstes Automatisierungsobjekt mit einem zweiten Automatisierungsobjekt (3) datentechnisch verbunden wird, wonach vom ersten Automatisierungsobjekt (1) eine objektspezifische Information, welche mittels einer Metasprache bzw. mittels einer zu einer Metasprache konvertierbaren Form vorliegt, an das zweite Automatisierungsobjekt (3) übermittelt wird, wobei insbesondere die objektspezifische Information hierarchisch aufgebaut ist.

9. Verfahren nach Anspruch 8, wonach im ersten Automatisierungsobjekt (1) objektspezifische Information dieses ersten Automatisierungsobjektes (1) zur datentechnischen Übermittlung an das zweite Automatisierungsobjekt (3) gespeichert wird.

10. Verfahren nach Anspruch 8 oder 9, wonach vor der Übermittlung der objektspezifischen Information mittels eines Datenabgleiches eine Änderung der Eigenschaft des Automatisierungsobjektes (1,3) erkannt wird.

11. Verfahren nach einem der Ansprüche 8 bis 10, wonach im ersten Automatisierungsobjekt (1) die objektspezifische Information in einem Binärformat gespeichert wird.

12. Verfahren nach einem der Ansprüche 8 bis 11, wonach das zweite Automatisierungsobjekt (3) die objektspezifische Information des ersten Automatisierungsobjektes (1) in eine Datenhaltung des zweiten Automatisierungsobjektes (3) abhängig von der hierarchischen Positionierung der Eigenschaften übernimmt.

13. Verfahren nach einem der Ansprüche 8 bis 12, wonach die Übermittlung der objektspezifischen Information in einem Initialisierungsmodus des zweiten Automatisierungsobjektes (3) durchgeführt wird.
